# EUROPEAN PATENT APPLICATION

(11) **EP 3 643 531 A1**
(43) Date of publication of application: **29.04.2020**
(21) Application number: 18821079.3
(22) Date of filing: 22.05.2018
(51) Int. Cl.: B60C 15/04

(54) **BEAD CORE**

(30) Priority: 19.06.2017 JP 2017119965
(71) Applicant: Bridgestone Corporation, Tokyo 104-8340 (JP)
(72) Inventor: KON Seiji, Tokyo 104-8340 (JP); KOUNO Yoshihide, Tokyo 104-8340 (JP)
(74) Representative: Oxley, Robin John George
(86) International application number: PCT/JP2018/019714
(87) International publication number: WO 2018/235504

(57) **Abstract**

A bead core of the present disclosure is a bead core comprising an annular body in which a strip member comprising one or more bead wires coated with a coating resin is wound and stacked, and in an axial cross section of the annular body, the strip member has two side surfaces, and has at least one end portion of at least one of the two side surfaces that is chamfered.

## Description

### TECHNICAL FIELD

The present disclosure relates to a bead core.

### BACKGROUND

Heretofore, a bead core comprising a bead wire coated with a coating resin has been suggested for a purpose of, for example, weight reduction of a member of a pneumatic tire (e.g., see PTL 1). In such a bead core, to decrease a winding count of the bead wire and thereby improve productivity, it is suggested that a strip member comprising one or more bead wires coated with a coating resin such as a thermoplastic resin is wound only in a stack direction and stacked to form an annular member. In this bead core, adjacent stacks of coating resins can be joined to each other, for example, by welding or bonding.

### CITATION LIST

### Patent Literature

PTL 1: Japanese Patent Laid-Open No. 2011-207157

### SUMMARY

### (Technical Problem)

However, in the above technology, there is concern that a failure occurs due to input of force to a peripheral member of a bead core, and there is room for improvement of durability of the bead core.

To solve the problem, it is an object of the present disclosure to provide a bead core having a high durability.

### (Solution to Problem)

A gist configuration of the present disclosure is as follows.

A bead core of the present disclosure is a bead core comprising an annular body in which a strip member comprising one or more bead wires coated with a coating resin is wound and stacked, wherein in an axial cross section of the annular body, the strip member has two side surfaces, and has at least one end portion of at least one of the two side surfaces that is chamfered.

### (Advantageous Effect)

According to the present disclosure, a bead core having a high durability can be provided.

### BRIEF DESCRIPTION OF THE DRAWINGS

In the accompanying drawings:
FIG. 1A is an axial cross-sectional view of a bead core according to an embodiment of the present disclosure and FIG. 1B is a cross-sectional view of a strip member in a direction orthogonal to an extending direction of the strip member;
FIG. 2 is a schematic side view of the bead core according to the embodiment of the present disclosure;
FIG. 3A is an axial cross-sectional view of a bead core according to another embodiment of the present disclosure and FIG. 3B is a cross-sectional view of a strip member in a direction orthogonal to an extending direction of the strip member;
FIG. 4A is an axial cross-sectional view of a bead core according to still another embodiment of the present disclosure and FIG. 4B is a cross-sectional view of a strip member in a direction orthogonal to an extending direction of the strip member;
FIG. 5A is an axial cross-sectional view of a bead core according to a further embodiment of the present disclosure and FIG. 5B is a cross-sectional view of a strip member in a direction orthogonal to an extending direction of the strip member; and
FIG. 6 is a tire widthwise partially cross-sectional view of a pneumatic tire including the bead core according to the embodiment of the present disclosure in a bead portion.

### DETAILED DESCRIPTION

Hereinafter, embodiments of the present disclosure will be illustrated and described in detail with reference to the drawings.

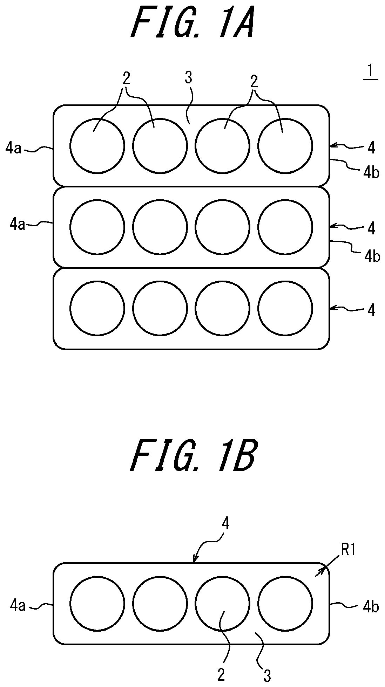

FIG. 1A is an axial cross-sectional view of a bead core according to the embodiment of the present disclosure. FIG. 1B is a cross-sectional view of a strip member in a direction orthogonal to an extending direction of the strip member. In the present embodiment, a bead core 1 is configured as an annular body in which a strip member 4 comprising one or more (in an illustrated example, four) bead wires 2 coated with a coating resin 3 is wound and stacked (in three stacks in this cross section).

As illustrated in FIGS. 1A and 1B, in this example, one stack of strip member 4 includes four bead wires 2 arranged in an axial direction of the annular body, but the present disclosure is not especially limited to this case. The number of the bead wires 2 may be one or more. Furthermore, in the illustrated example, three stacks are stacked in this cross section, but two or more stacks may be present.

In the bead wire 2, an arbitrary known material can be used, and, for example, a steel cord can be used. The steel cord can comprise, for example, a steel monofilament or stranded wire. Furthermore, in the bead wire 2, organic fibers, carbon fibers or the like may be used.

Additionally, in a coating resin 3, for example, a thermoplastic elastomer or a thermoplastic resin can be used, or a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 3 that coats the bead wire 2 has a tensile elastic modulus (prescribed in JIS K7113: 1995) of 50 MPa or more. Furthermore, it is preferable that the tensile elastic modulus of the coating resin 3 that coats the bead wire 2 is 1000 MPa or less. Note that the coating resin 3 mentioned herein does not contain a rubber (an organic polymer material that exhibits a rubber elasticity at normal temperature).

In the bead core 1 of the present embodiment, for example, mutual stacks have a state where the strip member 4 is wound while melting the coating resin 3 by hot plate welding or the like, and the molten coating resin 3 is solidified and joined. Alternatively, the stacks may be bonded and joined to each other with an adhesive or the like.

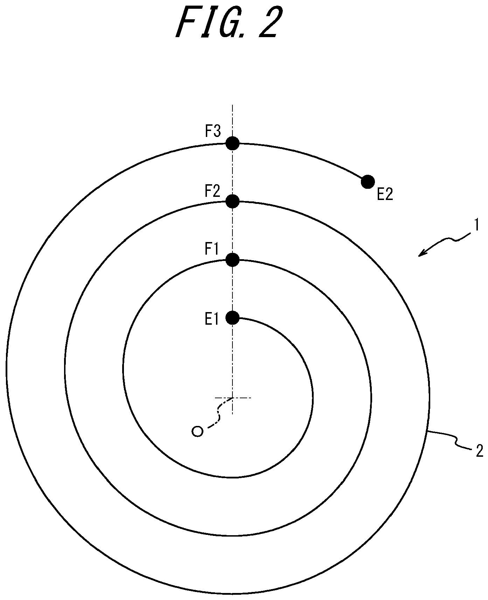

FIG. 2 is a schematic side view of the bead core according to the embodiment of the present disclosure. FIG. 2 only illustrates the bead wire 2 for simplicity (FIG. 2 illustrates a center line of the bead wire 2), and omits depiction of the coating resin 3. As illustrated in FIG. 2, the bead wire 2 is spirally wound from a winding start end E1 about an axis O of the annular body in this cross-sectional view. F1, F2 and F3 indicate orbital positions, and in this example, a winding end edge E2 extends beyond at least a point F3. Therefore, when seen in an arbitrary radial position, three stacks or more of the bead wires 2 are stacked in this example. There are not any special restrictions on a length (an overlap length) of the bead wire from the orbital position (in this example, the point F3) located closest to a winding end edge E2 side to the winding end edge (in this example, a point E2). For example, the length can be from 1/200 to 199/200 of an orbital distance from a point F2 to the point F3. When the length is 1/200 or more of the orbital distance, an area where the coating resins come in contact with each other can increase between the bead wires 2 adjacent in a radial direction (a stack direction). Consequently, for example, adhesiveness or a welding force can be increased, and a tensile burden can be decreased. On the other hand, when the length is 199/200 or less of the orbital distance, the bead core can have a reduced weight. For similar reasons, the overlap length is preferably from 1/100 to 2/3 of the orbital distance from the point F2 to the point F3, and more preferably from 1/50 to 1/3 of the orbital distance from the point F2 to the point F3.

In the present embodiment, the strip member 4 is formed by coating an outer peripheral side of the bead wire 2 with the molten coating resin 3, and cooling and solidifying the resin. Furthermore, the annular body of the bead core 1 can be formed by winding and stacking the strip member 4, and the stacks can be joined to each other, for example, by winding the strip member 4 while melting the coating resin 3 by the hot plate welding or the like, and solidifying the molten coating resin 3. Alternatively, the stacks can be joined by bonding the stacks to each other with the adhesive or the like.

As illustrated in FIGS. 1A and 1B, according to the bead core 1 of the present embodiment, in an axial cross section of the annular body, the strip member 4 has two side surfaces 4a and 4b, and has at least one end portion (in the illustrated example, both end portions) of at least one of the two side surfaces 4a and 4b (in the illustrated example, both the side surfaces 4a and 4b) that is chamfered. In the example illustrated in FIGS. 1A and 1B, both the end portions are curved at a predetermined radius R1 of curvature in the axial cross section of the annular body. Note that the strip member 4 has a cross-sectional shape formed in a desired shape using, for example, an extruder.

Hereinafter, description will be made as to operations and effects of the bead core of the present embodiment.

According to the bead core of the present embodiment, at least one end portion (in the present embodiment, both the end portions) of at least one of the side surfaces of the strip member 4 (in the present embodiment, both the side surfaces 4a and 4b) is chamfered (in the present embodiment, both the end portions are curved at the predetermined radius R1 of curvature). Therefore, local concentration of input of force from a peripheral member (a rubber or the like) on the coating resin 3 can be relaxed. Furthermore, the chamfering increases a joining force of the coating resin 3 to the peripheral member (the welding force, adhesiveness or the like), and the strip member 4 is hard to be deformed to the input of force. This can improve durability of the bead core. Additionally, according to the present embodiment, a recess and protruding portion of the above chamfer can be formed, for example, without applying any heat for re-melting in a mold during molding of the bead core.

Note that a maximum dimension of the recess and protruding portion of the chamfer is preferably 1/2 or less of a dimension of a resin-coated cord in a thickness direction in a cross section of the cord (in an up-down direction of the drawing).

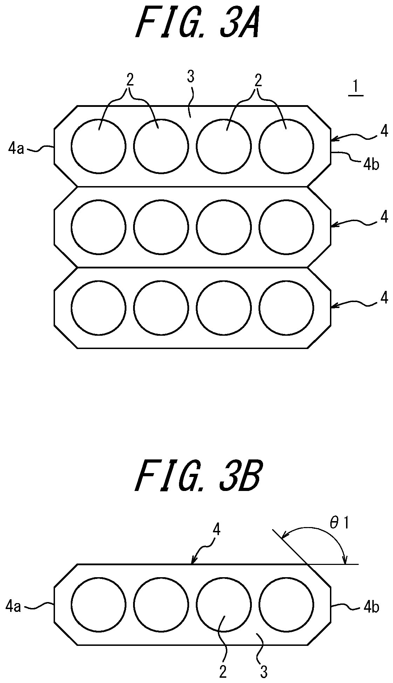

FIG. 3A is an axial cross-sectional view of a bead core according to another embodiment of the present disclosure. FIG. 3B is a cross-sectional view of a strip member in a direction orthogonal to an extending direction of the strip member. Also according to this embodiment, in an axial cross section of an annular body, a strip member 4 has two side surfaces 4a and 4b, and has at least one end portion (in the illustrated example, both end portions) of at least one of the two side surfaces 4a and 4b (in the illustrated example, both the side surfaces 4a and 4b) that is chamfered. Specifically, both the end portions are formed as substantially linear tapers in the axial cross section of the annular body.

Also in the embodiment illustrated in FIGS. 3A and 3B, at least one end portion (in the present embodiment, both the end portions) of at least one of the side surfaces of the strip member 4 (in the present embodiment, both the side surfaces 4a and 4b) is chamfered (in the present embodiment, both the end portions are formed as the substantially linear tapers). Therefore, local concentration of input of force from a peripheral member (a rubber or the like) on a coating resin 3 can be relaxed. Furthermore, the chamfering increases a joining force of the coating resin 3 to the peripheral member (a welding force, adhesiveness or the like), and the strip member 4 is hard to be deformed to the input of force. This can improve durability of the bead core.

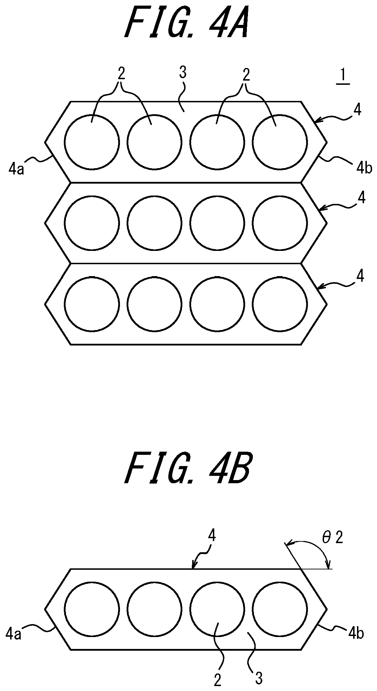

FIG. 4A is an axial cross-sectional view of a bead core according to still another embodiment of the present disclosure. FIG. 4B is a cross-sectional view of a strip member in a direction orthogonal to an extending direction of the strip member. Also according to this embodiment, in an axial cross section of an annular body, a strip member 4 has two side surfaces 4a and 4b, and has at least one end portion (in the illustrated example, both end portions) of at least one of the two side surfaces 4a and 4b (in the illustrated example, both the side surfaces 4a and 4b) that is chamfered. Specifically, both the end portions are formed as substantially linear tapers in the axial cross section of the annular body. In the example illustrated in FIGS. 4A and 4B, each of the side surfaces 4a and 4b is formed only of two tapers, and does not have any portions orthogonal to an axial direction of the annular body in this cross section.

Also in the embodiment illustrated in FIGS. 4A and 4B, at least one end portion (in the present embodiment, both the end portions) of at least one of the side surfaces of the strip member 4 (in the present embodiment, both the side surfaces 4a and 4b) is chamfered (in the present embodiment, both the end portions are chamfered, and each of the side surfaces 4a and 4b is formed only of two tapers, and does not have any portions orthogonal to the axial direction of the annular body in this cross section). Therefore, local concentration of input of force from a peripheral member (a rubber or the like) on a coating resin 3 can be relaxed. Furthermore, the chamfering increases a joining force of the coating resin 3 to the peripheral member (a welding force, adhesiveness or the like), and the strip member 4 is hard to be deformed to the input of force. This can improve durability of the bead core.

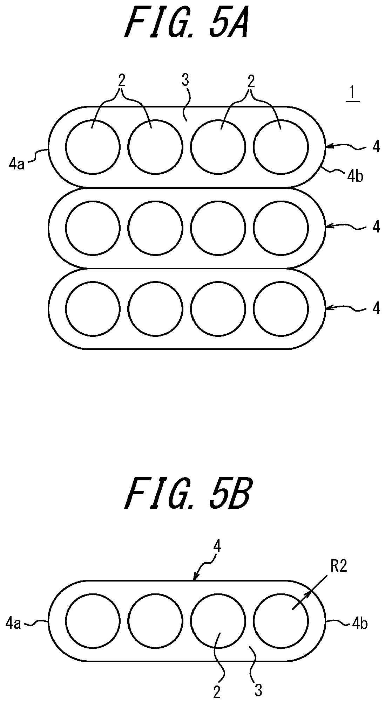

FIG. 5A is an axial cross-sectional view of a bead core according to a further embodiment of the present disclosure. FIG. 5B is a cross-sectional view of a strip member in a direction orthogonal to an extending direction of the strip member. Also according to the further embodiment, in an axial cross section of an annular body, a strip member 4 has two side surfaces 4a and 4b, and has at least one end portion (in the illustrated example, both end portions) of at least one of the two side surfaces 4a and 4b (in the illustrated example, both the side surfaces 4a and 4b) that is chamfered. Specifically, in the axial cross section of the annular body, the side surfaces 4a and 4b each including both the end portions are entirely curved at a predetermined radius R2 of curvature.

Also in the further embodiment illustrated in FIGS. 5A and 5B, at least one end portion (in the present embodiment, both the end portions) of at least one of the side surfaces of the strip member 4 (in the present embodiment, both the side surfaces 4a and 4b) is chamfered (in the present embodiment, the side surface including both the end portions is entirely curved at the predetermined radius R2 of curvature). Therefore, local concentration of input of force from a peripheral member (a rubber or the like) on a coating resin 3 can be relaxed. Furthermore, the chamfering increases a joining force of the coating resin 3 to the peripheral member (a welding force, adhesiveness or the like), and the strip member 4 is hard to be deformed to the input of force. This can improve durability of the bead core.

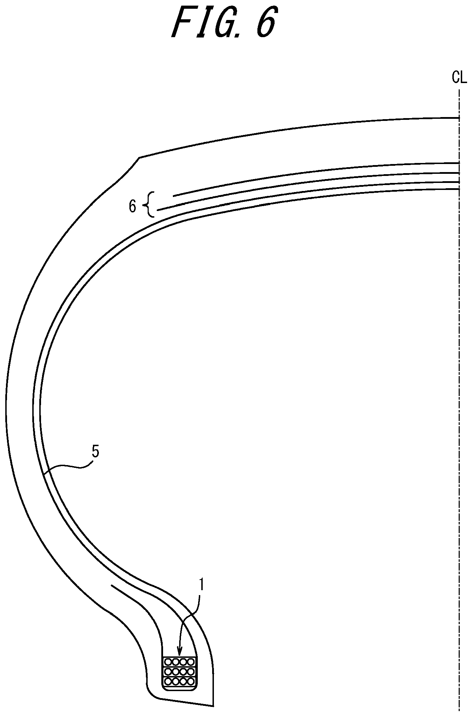

FIG. 6 is a tire widthwise partially cross-sectional view of a pneumatic tire including the bead core according to the embodiment of the present disclosure in a bead portion. FIG. 6 only illustrates a tire widthwise half portion via a tire equatorial plane CL as a boundary, and another non-illustrated half portion also has a similar configuration. As an example, as illustrated in FIG. 6, the pneumatic tire comprises the bead core 1 according to the embodiment of the present disclosure embedded in each of a pair of bead portions, and includes a belt 6 comprising two belt layers in the illustrated example on an outer side of a carcass 5 that toroidally straddles the bead core 1, in a tire radial direction.

According to the present disclosure, in the axial cross section of the annular body, it is preferable that at least one end portion of each of two side surfaces of the strip member 4 is chamfered. This is why the above operations and effects are obtained with both the side surfaces, and the durability of the bead core can further improve. Note that in each of the above embodiments, at least one end portion of each of the two side surfaces 4a and 4b is chamfered, but at least one end portion of only one of the side surfaces may be chamfered.

In the present disclosure, in the axial cross section of the annular body, it is preferable that both the end portions of at least one of the two side surfaces of the strip member 4 are chamfered. This is why the above operations and effects are obtained with both the end portions, and the durability of the bead core can further improve. Note that in each of the above embodiments, both the end portions are chamfered, but one of the end portions may only be chamfered.

As above, the embodiments of the present disclosure have been described, but the present disclosure is not limited to the above embodiments. For example, in the examples illustrated in FIGS. 1A and 1B and FIGS. 5A and 5B, the radii R1 and R2 of curvatures of the end portions of the side surfaces 4a and 4b are the same, but can be different. Furthermore, the radii R1 and R2 of curvatures can be different at both ends of the same side surface. Additionally, the radius of curvature is constant in each of the above embodiments, but may vary. Furthermore, in the examples illustrated in FIGS. 3A and 3B and FIGS. 4A and 4B, angles θ1 and θ2 in the end portions of the side surface 4a and the side surface 4b are the same, but can be different, and the above angles θ1 and θ2 can be different at both ends of the same side surface.

Furthermore, the end portion of the side surface can be chamfered in a shape in which two or more tapers are coupled. Additionally, a chamfer mode can be different in each end portion of the side surface. For example, in one side surface, both end portions may be chamfered in a curved shape having a radius R1 of curvature as illustrated in FIGS. 1A and 1B, and in the other side surface, both end portions may be chamfered to have a substantially linear taper as illustrated in FIGS. 3A and 3B. Thus, the chamfering can have various modes, and a combination of the modes can be arbitrary in four end portions in total of both end portions of both side surfaces (including a case where the end portions have the same mode and a case where the end portions have different modes).

### REFERENCE SIGNS LIST

- 1: bead core
- 2: bead wire
- 3: coating resin
- 4: strip member
- 4a and 4b: side surface
- 5: carcass
- 6: belt

## Claims

1. A bead core comprising an annular body in which a strip member comprising one or more bead wires coated with a coating resin is wound and stacked, wherein in an axial cross section of the annular body, the strip member has two side surfaces, and has at least one end portion of at least one of the two side surfaces that is chamfered.

2. The bead core according to claim 1, wherein in the axial cross section of the annular body, at least one of the end portions of each of the two side surfaces is chamfered.

3. The bead core according to claim 1 or 2, wherein in the axial cross section of the annular body, the end portion is curved.

4. The bead core according to claim 1 or 2, wherein in the axial cross section of the annular body, the end portion is formed as a substantially linear taper.

5. The bead core according to claim 1 or 2, wherein in the axial cross section of the annular body, the side surface is entirely curved.
